# EUROPÄISCHE PATENTSCHRIFT

(11) **EP 1 082 275 B1**
(45) Veröffentlichungstag und Bekanntmachung des Hinweises auf die Patenterteilung: **05.12.2001**
(21) Anmeldenummer: 99916831.3
(22) Anmeldetag: 18.03.1999
(51) Int. Cl.: C04B 28/00, C04B 24/36

(54) **FLIESSFÄHIGES, HYDRAULISCH ABBINDENDES MÖRTELSYSTEM**
FLOWABLE, HYDRAULIC SETTING MORTAR SYSTEM
SYSTEME DE MORTIER COULANT ET A PRISE HYDRAULIQUE

(30) Priorität: 20.03.1998 DE 19812246
(43) Veröffentlichungstag der Anmeldung: 14.03.2001
(73) Patentinhaber: PCI Augsburg GmbH, 86012 Augsburg (DE)
(72) Erfinder: FRENKENBERGER, Karl, D-86507 Oberottmarshausen (DE); HEICHELE, Thomas, D-86399 Bobingen (DE); HUBER, Manfred, D-86179 Augsburg (DE)
(74) Vertreter: HOFFMANN - EITLE
(86) Internationale Anmeldenummer: EP9901811
(87) Internationale Veröffentlichungsnummer: WO9948835

(56) Entgegenhaltungen:
- EP-A- 0 319 702
- DD-A- 105 014
- DE-A- 1 800 829
- DE-A- 2 734 360
- DE-A- 2 741 137
- DE-A- 3 245 068
- FR-A- 1 436 589
- US-A- 4 084 981

## Beschreibung

### Technisches Gebiet

Gegenstand der vorliegenden Erfindung ist ein fließfähiges, hydraulisch abbindendes Mörtelsystem mit verbesserten anwendungstechnischen Eigenschaften, wie z. B. einer erhöhten Frost/Tausalz-Beständigkeit, einem erniedrigten dynamischen E-Modul sowie einem günstigeren Biegezug-/ Druckfestigkeitsverhältnis, wobei das entsprechende Mörtelsystem insbesondere für selbstnivellierende Fließestriche geeignet ist.

### Stand der Technik

Hierzu sind folgende Dokumente des Standes der Technik zu diskutieren:

Aus EP-A-0 319 702 ist ein Tragschichtmischgut bekannt, das eine Feststoffkomponente mit einem Anteil an hydraulischem Bindemittel von etwa 3% und eine anionische Bitumen-Emulsion als Flüssigkomponente aufweist.

In DE 27 41 137 wird die Formulierung eines Mörtels beschrieben, der als Bindemittel sowohl eine hydraulische, als auch eine bituminöse Komponente in der Form einer anionischen Emulsion enthält. Ferner wird die Formulierung von anionischen Bitumen-Emulsionen diskutiert.

In DE 18 00 829 findet sich eine Belagmischung mit anionischer Bitumen-Emulsion und einer allerdings geringen Menge an Zement.

Das Anforderungsprofil im Hinblick auf die anwendungstechnischen Eigenschaften von hydraulisch abbindenden Fließmörteln mit sehr gutem Fließvermögen - sog. selbstnivellierende Fließestriche - ist relativ vielseitig. Neben einer guten Fließfähigkeit und Verarbeitbarkeit müssen diese Systeme nach der Aushärtung einen relativ niedrigen dynamischen E-Modul und ein relativ günstiges Biegezug-/Druckfestigkeitsverhältnis ergeben, damit die entsprechenden Estriche die notwendige Elastizität und geringe Neigung zur Rißbildung aufweisen. Darüber hinaus müssen die entsprechenden Estriche eine gute Frost/Tausalz-Beständigkeit besitzen, um eine sichere Anwendung im Außenbereich zu gewährleisten.

Es ist bekannt, daß man den entsprechenden Mörtelsystemen zur Verbesserung der Frost/Tausalz-Beständigkeit Luftporenbildner zusetzt, wobei jedoch keine ausreichende Frost/Tausalz-Beständigkeit erreicht werden kann. Nachteilig ist hierbei außerdem die Tatsache, daß mit Hilfe dieser Zusatzmittel keine homogene Verteilung und Stabilität der Luftporen erzielt werden kann, woraus vergleichsweise ungünstige Biegezug- oder Druckfestigkeiten der entsprechenden Estriche resultieren.

Der vorliegenden Erfindung lag daher die Aufgabe zugrunde, ein fließfähiges, hydraulisch abbindendes Mörtelsystem zu entwickeln, welches die genannten Nachteile des Standes der Technik nicht aufweist, sondern eine ausreichende Frost/Tausalz-Beständigkeit gewährleistet, ohne die anderen anwendungstechnischen Eigenschaften des Mörtelsystems negativ zu beeinflussen.

### Darstellung der Erfindung

Diese Aufgabe wurde erfindungsgemäß durch die Bereitstellung eines fließfähigen, hydraulisch abbindenden Mörtelsystems mit einer Pulver-Komponente A) und einer Flüssig-Komponente B) gelöst, wobei die Komponente A) enthält:
20 bis 60 Gew.-% wenigstens eines hydraulisch härtenden Bindemittels
30 bis 70 Gew.-% an Füllstoffen
0,1 bis 5 Gew.-% an Additiven und
0 bis 5 Gew.-% eines redispergierbaren Polymerisat-Pulvers
und wobei die Flüssig-Komponente B) Wasser und 1 bis 30 Gew.-%, bezogen auf das Gewicht des hydraulisch härtenden Bindemittels, einer wäßrigen, anionischen Bitumen-Emulsion mit einem Feststoff-Gehalt von 30 bis 70 Gew.-% enthält. Weitere Bestandteile der Flüssig-Komponente B) können zusätzliches Wasser und/oder eine wäßrige Polymer-Dispersion auf Vinyl- oder Acrylat-Basis sein. Vorzugsweise besteht das erfindungsgemäße Mörtelsystem im wesentlichen oder sogar ausschließlich aus den Komponenten A) und B); denkbar ist aber auch das Vorhandensein weiterer Zuschläge bzw. Komponenten in geringen Mengen, soweit dadurch der erfindungsgemäße Effekt nicht beeinträchtigt wird.

### Weg(e) zur Ausführung der Erfindung

Es hat sich überraschenderweise gezeigt, daß das erfindungsgemäße Mörtelsystem eine erhöhte Frost/Tausalz-Beständigkeit und einen niedrigeren dynamischen E-Modul im Vergleich zu den bisher bekannten Systemen aufweist. Außerdem konnte bei den ausgehärteten Produkten ein günstigeres Biegezug-/ Druckfestigkeitsverhältnis festgestellt werden, was ebenfalls nicht vorhersehbar war.

Das Mörtelsystem entsprechend der vorliegenden Erfindung weist eine pulverfö:rmige Hauptkomponente A) und eine flüssige Nebenkomponente B) auf, wobei die Pulver-Komponente A) als wesentliche Bestandteile Bindemittel, Füllstoffe und sonstigen Additive enthält. Als hydraulisch härtende Bindemittel mit einem Anteil von 20 bis 60 Gew.-% (bezogen auf die Gesamtformulierung der Komponente A) werden insbesondere Portlandzement, Tonerde-Schmelzzement (Aluminatzement), Kompositzement, HS-Zement, Gips, Kalk oder Mischungen davon eingesetzt. Selbstverständlich kann auch eine Mischung aus zwei oder mehreren dieser Stoffe als Bindemittel eingesetzt werden; in der Praxis kann dies sogar bevorzugt sein. Daneben enthält die Pulver-Komponente A) noch einen oder mehrere Füllstoffe in einer Menge von 30 bis 70 Gew.-%, wobei auf Zuschläge wie Quarzsand, Quarzmehl, Schwerspat, Kalksteinmehl (Kreide), Aluminiumoxid, Talkum oder Mischungen davon zurückgegriffen werden kann.

Als dritte erfindungswesentliche Komponente enthält die Komponente A) mindestens ein Additiv ausgewählt aus der Gruppe Luftporenbildner, Verflüssiger, Beschleuniger, Verzögerer, Antiabsctzmittel, Hydrophobierungsmittel und Schwundkompensationsmittel in einer Menge von 0,1 bis 5 Gew.-%. Als Luftporenbildner können beispielsweise Öle, Fette oder Naturharze (wie z. B. Kieferwurzelharz) und/oder synthetische Tenside auf Basis von Fettsäuresulfonaten eingesetzt werden Gemäß einer bevorzugten Ausführungsform werden Vinsolharze verwendet, welche bei der Holzdestillation als Naturharz anfallen und ca. 85 % Harzsäuren und ca. 15 % phenolische Produkte enthalten.

Um dem erfindungsgemäßen Mörtelsystem eine gute Fließfähigkeit zu verleihen, ist es zweckmäßig, der Pulver-Komponente A) ein Fließmittel zuzusetzen, wobei vorzugsweise Melamin-Formaldehyd- oder Naphthalin-Formaldehyd-Kondensationsprodukte, Polymer-Verbindungen auf Vinyl- oder Acrylat-Basis oder Casein verwendet werden.

Daneben können der Pulver-Komponente A) noch weitere Zusatzmittel in Form von Beschleunigern (wie z. B. Lithiumcarbonat oder Calciumformiat), Verzögerern (ausgewählt aus der Gruppe Citronensäure, Weinsäure bzw. deren Salze, Phosphaten oder Glukonaten), Antiabsetzmitteln (wie z. B. Celluloseether), Hydrophobierungsmitteln (insbesondere in Form von Calciumsalzen von Fettsäuren oder Silikonölen) und/oder Schwundkompensationsmitteln (bspw. Calciumoxid, Aluminiumpulver, Polyethylenglykole, nichtionische Tenside oder Neopentylglykol) zugegeben werden.

Im Rahmen der vorliegenden Erfindung ist es außerdem möglich, daß die Pulver-Komponente A) noch bis zu 5 Gew.-% eines redispergierbaren Polymerisat-Pulvers, insbesondere auf Vinyl- oder Acryl-Basis, enthält. Vorzugsweise werden hierbei Polymerisate auf Basis von Vinylacetat, Vinylpropionat, Vinyllaurat, Vinylchlorid, Vinylidenchlorid, geradkettigen oder verzweigten Vinylestern mit 3 bis 18 C-Atomen, Acryl- und Methacryl-Monomeren, insbesondere Estern, sowie Styrol und Ethen eingesetzt, die in Form threr Homo-, Co- oder Terpolymerisate sowie als Pfropfpolymerisate vorliegen können.

Die Teilchengröße der Pulver-Komponente A) kann in weiten Grenzen variiert werden, doch hat es sich aus Gründen der Bearbeitbarkeit als besonders vorteilhaft erwiesen, die mittlere Teilchengroße der Pulver-Komponente A) auf einen Wert von 10 bis 4000 µm einzustellen

Als weitere erfindungswesentliche Komponente enthält das erfindungsgemäße Mörtelsystem eine Flüssig-Komponente B), die eine wäßrige, anionische Bitumen-Emulsion enthält, und zwar in einer Menge von 1 bis 30 Gew.-%, bezogen auf das Gewicht des Bindsmittels in Komponente A). Als anionische Bitumen-Emulsionen werden Produkte mit einem Feststoffgehalt von 30 bis 70 Gew.-% eingesetzt, die vorzugsweise eine Härte von B30 bis B100 entsprechend der DIN-Norm 52011 haben. Solche Produkte sind im Handel erhältlich.

Ein weiterer Bestandteil der Komponente B) kann zusätzliches Wasser sein. Hiervon kann die Komponente B vorzugsweise 50 bis 120 Gew.-%, bezogen auf das Gewicht des hydraulisch härtenden Bindemittels in Komponente A), enthalten.

In einer besonders bevorzugten Ausführungsform wird als Komponente B) eine anionische Bitumenemulsion mit einem Feststoffgehalt von 50-70 Gew.-% in Mischung mit zusätzlichem Wasser in einem Verhältnis von 1:2 bis 1:4 Gewichtsteilen verwendet, wobei die Gesamtmenge an Komponente B) im allgemeinen dem 0,8- bis 1,2-fachen der Menge (in g) des hydraulisch härtenden Bindemittels in Komponente A) entspricht.

Es ist im Rahmen der vorliegenden Erfindung möglich, daß die Flüssig-Komponente B) neben der wäßrigen anionischen Bitumen-Emulsion noch eine wäßrige Polymer-Dispersion auf Vinyl- oder Acrylat-Basis enthalten kann, wobei auf die bei der Pulver-Komponente A) im Zusammenhang mit den redispergierbaren Polymerisat-Pulvern beschriebenen Vinyl- oder Acrylatpolymerisate zurückgegriffen werden kann.

Gemäß einer bevorzugten Ausführungsform enthält die Flüssig-Komponente B) die anionische Bitumen-Emulsion und die wäßrige Polymersuspension in einem Gew.-Verhältnis von 10:90 bis 90:10. Besonders bevorzugt besteht die Komponente B) aus 10 bis 90 Gew.-% der wäßrigen anionischen Bitumen-Emulsion sowie 90 bis 10 Gew.-% aus der wäßrigen Polymer-Dispersion auf Vinyl- oder Acrylat-Basis.

Die Herstellung des erfindungsgemäßen Mörtelsystems ist relativ unproblematisch. Hierzu werden die Bestandteile der Pulver-Komponente A) homogen vermischt, unmittelbar vor der Verarbeitung mit der Flüssig-Komponente B) mit der wäßrigen, anionischen Bitumen-Emulsion versetzt und wie üblich verarbeitet.

Das erfindungsgemäß vorgeschlagene Mörtelsystem eignet sich hervorragend zur Herstellung von selbstnivellierenden Fließestrichen, die aufgrund ihrer ausgezeichneten Frost/Tausalz-Beständigkeit im Gegensatz zu den bisherigen Systemen auch im Außenbereich fließfähig angewendet werden können. Außerdem weisen die mit dem erfindungsgemäßen Mörtelsystem ausgehärteten produkte einen vergleichsweise niedrigen elastischen E-Modul sowie ein relativ günstiges Biegezug-/ Druckfestigkeitsverhältnis von 1 : 3 auf.

Die nachfolgenden Beispiele sollen die Erfindung näher erläutern, ohne sie zu beschränken.

### Beispiel 1 (Vergleich)

| A) | Pulver-Komponente | |
|---|---|---|
| | Tonerde-Schmelzzement | 20 Gew.-% |
| | α-Halbhydrat | 7 Gew.-% |
| | Portlandzement | 3 Gew.-% |
| | Kreide | 15 Gew.-% |
| | Quarzsand (0,7 - 1,2 mm) | 25 Gew.-% |
| | Additive | 1 Gew-% |
| | bestehend aus | |

0,20 Gew.-% Luftporenbildner auf Basis Fettsäuresulfonat
0,15 Gew.-% Fließmittel auf Basis Milchsäurecasein
0,15 Gew.-% Antiabsetzmittel auf Basis Methylcellulose
0,30 Gew.-% Entschäumer auf Basis Silikonöl
0,20 Gew.-% Verzögerer auf Basis Zitronensäure.

| B) | Flüssig-Komponente | |
|---|---|---|
| | Wasser | 29 Gew.-% |

### Beispiel 2 (Beste Ausführungsform der Erfindung)

| A) | Pulver-Komponente | |
|---|---|---|
| | Tonerde-Schmelzzement | 20 Gew.-% |
| | α-Halbhydrat | 7 Gew.-% |
| | Portlandzement | 3 Gew.-% |
| | Kreide | 15 Gew.-% |
| | Quarzsand (0,7 - 1,2 mm) | 25 Gew.-% |
| | Additive | 1 Gew-% |
| | bestehend aus | |

| B) | Flüssig-Komponente | 29 Gew.-% |
|---|---|---|
| | bestehend aus | |

1 Gew.-Teil einer anionischen Bitumen-Emulsion (B80) mit einem Feststoffgehalt von 60 Gew.-% (Rasco-Emulsion P) und 3 Gew.-Teilen Wasser.

### Beispiel 3 (Erfindung)

| A) | Pulver-Komponente | |
|---|---|---|
| | Tonerde-Schmelzzement | 20 Gew-% |
| | α-Halbhydrat | 7Gew-% |
| | Portlandzement | 3 Gew.-% |
| | Kreide | 15 Gew.-% |
| | Quarzsand (0,7 - 1,2 mm) | 25 Gew.-% |
| | Additive | 1 Gew.-% |
| | (analog Beispiel 1) | |

| B) | Flüssig-Komponente | 29 Gew.-% |
|---|---|---|
| | bestehend aus | |

1 Gew.-Teil einer anionischen Bitumen-Emulsion (B80) mit einem Feststoffgehalt von 60 Gew.-% (Rasco-Emulsion P) und 2 Gew.-Teilen Wasser.

### Beispiel 4

Zur Bestimmung der Frost/Tausalz-Beständigkeit wurde folgende Frost-/Tausalzwechsel-Prüfung vorgenommen:
Mit den Mörtelsystemen entsprechend den Beispielen 1 bis 3 werden Prismen (4 x 4 x 16 cm) gegossen, nach 1 Tag ausgeschalt, weitere 6 Tage bei Normklima (23 °C/150 % rel. Luftfeuchte) gelagert, in eine 3 Gew.-%ige NaCl-Lösung eingelegt, über Nacht bei -20 °C eingefroren und über Tag aufgetaut (= 1 Zyklus), Beurteilung auf Rißbildung und Abplatzungen an den Prismen.

Folgende Ergebnisse wurden erzielt
Beispiel 1: nach 5 Zyklen zerstort
Beispiel 2: nach 50 Zyklen schadlos
Beispiel 3: nach 36 Zyklen zerstort

### Beispiel 5

Die Bestimmung des dynamischen E-Moduls (Elastizitätsmodul) wurde mit dem Beton-Sonograf 1000 (M/008) an Prismen (40 x 40 x 160 mm) vorgenommen, die mit den Mörtelsystemen entsprechend den Beispielen 1 bis 3 hergestellt wurden (nach 1 und 28 Tagen bzw. 25 und 50 Frost/Tausalz-Zyklen).

Folgende Ergebnisse wurden erzielt:
- Beispiel 1:: 17 x 10³ N/mm² nach 1 Tag
17 x 10³ N/mm² nach 28 Tagen
- Beispiel 2:: 7 x 10³ N/mm² nach 1 Tag
7 x 10³ N/mm² nach 28 Tagen
8 x 10³ N/mm² nach 25 Frost/Tausalz-Zyklen
9 x 10³ N/mm² nach 50 Frost/Tausalz-Zyklen
- Beispiel 3:: 6 x 10³ N/mm² nach 1 Tag
4 x 10³ N/mm² nach 28 Tagen
4 x 10³ N/mm² nach 25 Frost/Tausalz-Zyklen

## Patentansprüche

1. Fließfähiges, hydraulisch abbindendes Mörtelsystem mit einer Pulver-Komponente A) und einer Flüssig-Komponente B), wobei die Komponente A) enthält:
20 bis 60 Gew.-% wenigstens eines hydraulisch härtenden Bindemittels
30 bis 70 Gew.-% an Füllstoffen
0,1 bis 5 Gew.-% an Additiven und
0 bis 5 Gew.-% eines redispergierbaren Polymerisat-Pulvers und wobei die Flüssig-Komponente B) Wasser und 1 bis 30 Gew.-%, bezogen auf das Gewicht des hydraulisch härtenden Bindemittels, einer wäßrigen, anionischen Bitumen-Emulsion mit einem Feststoff-Gehalt von 30 bis 70 Gew.-% enthält.

2. Mörtelsystem nach Anspruch 1, **dadurch gekennzeichnet, daß** es in Komponente A)
- mindestens ein Bindemittel, ausgewählt aus Portlandzement, Tonerde-Schmelzzement, Kompositzement, HS-Zement, Gips, Kalk und Mischungen davon;
- mindestens einen Füllstoff, ausgewählt aus Quarzsand, Quarzmehl, Schwerspat, Kalksteinmehl, Kreide, Aluminiumoxid, Talkum, und Mischungen davon;
- mindestens ein Additiv, ausgewählt aus Luftporenbildnern, Fließmitteln, Beschleunigern, Verzögerern, Antiabsetzmitteln, Hydrophobierungsmitteln und Schwundkompensationsmitteln, und
- mindestens ein redispergierbares Polymerisatpulver, ausgewählt aus Polymerisaten auf Vinyl- oder Acrylat-Basis, enthält.

3. Mörtelsystem nach den Ansprüchen 1 und 2, **dadurch gekennzeichnet, daß** es als Additiv ein Fließmittel aus der Gruppe, bestehend aus Melamin-Formaldehyd-Kondensationsprodukten, Naphthalin-Formaldehyd-Kondensationsprodukten, Polymer-Verbindungen auf Vinylbasis, Polymer-Verbindungen auf Acrylatbasis und Casein, enthält.

4. Mörtelsystem nach Anspruch 2, **dadurch gekennzeichnet,**
- **daß** die Luftporenbildner ausgewählt werden aus Naturharzen und/oder synthetischen Tensiden auf Basis von Fettsäuresulfonaten,
- **daß** die Beschleuniger ausgewählt werden aus Lithiumcarbonat und Calciumformiat,
- **daß** die Verzögerer ausgewählt werden aus Citronensäure, Citraten, Weinsäure, Tartraten, Phosphaten und Glukonaten,
- **daß** das Antiabsetzmittel einen Celluloseether darstellt,
- **daß** das Hydrophobierungsmittel ausgewählt wird aus Calciumsalzen von Fettsäuren und Silikonölen, und
- **daß** das Schwundkompensationsmittel ausgewählt wird aus der Gruppe bestehend aus Calciumoxid, Aluminiumpulver, Polyethylenglykolen, nichtionischen Tensiden und Neopentylglykol.

5. Mörtelsystem nach Anspruch 1 und 2, **dadurch gekennzeichnet, daß** die redispergierbaren Polymerisat-Pulver ausgewählt werden aus Polymeren auf Basis von Vinylacetat, Vinylpropionat, Vinyllaurat, Vinylchlorid, Vinylidenchlorid, geradkettigen oder verzweigten Vinylestem mit 3 bis 18 C-Atomen, Acryl- und Methacryl-Monomeren (insbesondere Estem) sowie Styrol und Ethen.

6. Mörtelsystem nach den Ansprüchen 1 bis 5, **dadurch gekennzeichnet, daß** die Flüssig-Komponente B) außerdem eine wäßrige Polymer-Dispersion auf Vinyl- oder Acrylat-Basis enthält.

7. Mörtelsystem nach den Ansprüchen 1 bis 6, **dadurch gekennzeichnet, daß** die Flüssig-Komponente B) eine wäßrige anionische Bitumen-Emulsion und eine wäßrige Polymer-Dispersion auf Vinyl- oder Acrylat-Basis im Gewichtsverhältnis 10:90 bis 90:10 enthält.

8. Mörtelsystem nach den Ansprüchen 1 bis 7, **dadurch gekennzeichnet, daß** in der Flüssigkomponente B) 50 bis 120 Gew.-% Wasser, bezogen auf das Gewicht des hydraulisch härtenden Bindemittels in Komponente A), enthalten sind.

9. Mörtelsystem nach den Ansprüchen 1 bis 8, **dadurch gekennzeichnet, daß** es ausschließlich aus den beiden Komponenten A) und B) besteht.

10. Verwendung des fließfähigen, hydraulisch abbindenden Mörtelsystems nach einem der vorhergehenden Ansprüche zur Herstellung von selbstnivellierenden Fließestrichen.

## Claims

1. Flowable, hydraulically setting mortar system having a powder component A) and a liquid component B), wherein the component A) contains:
20 to 60 wt.% of at least one hydraulically hardening binder
30 to 70 wt.% of fillers
0.1 to 5 wt.% of additives and
0 to 5 wt.% of a redispersible polymer powder
and wherein the liquid component B) contains water and 1 to 30 wt.%, based on the weight of the hydraulically hardening binder, of an aqueous, anionic bitumen emulsion having a solids content of 30 to 70 wt.%.

2. Mortar system according to claim 1, **characterised in that** it contains in component A)
- at least one binder, selected from Portland cement, aluminous cement, composite cement, HS cement, gypsum, lime and mixtures thereof;
- at least one filler, selected from quartz sand, quartz powder, barite, limestone powder, chalk, aluminium oxide, talcum, and mixtures thereof;
- at least one additive, selected from air-entraining additives, flow agents, accelerators, inhibitors, anti-settling agents, hydrophobing agents and shrinkage compensation agents, and
- at least one redispersible polymer powder, selected from polymers based on vinyl or acrylate.

3. Mortar system according to claims 1 and 2, **characterised in that** it contains as additive, a flow agent from the group consisting of melamine-formaldehyde condensation products, naphthalene-formaldehyde condensation products, polymer compounds based on vinyl, polymer compounds based on acrylate and casein.

4. Mortar system according to claim 2, **characterised in that**
- the air-entraining additives are selected from natural resins and/or synthetic surfactants based on fatty acid sulphonates,
- the accelerators are selected from lithium carbonate and calcium formate,
- the inhibitors are selected from citric acid, citrates, tartaric acid, tartrates, phosphates and gluconates,
- the anti-settling agent is a cellulose ether,
- the hydrophobing agent is selected from calcium salts of fatty acids and silicone oils, and
- the shrinkage compensation agent is selected from the group consisting of calcium oxide, aluminium powder, polyethylene glycols, non-ionic surfactants and neopentyl glycol.

5. Mortar system according to claim 1 and 2, **characterised in that** the redispersible polymer powders are selected from polymers based on vinyl acetate, vinyl propionate, vinyl laurate, vinyl chloride, vinylidene chloride, straight-chain or branched vinyl esters having 3 to 18 C atoms, acrylic and methacrylic monomers (in particular esters) as well as styrene and ethene.

6. Mortar system according to claims 1 to 5, **characterised in that** the liquid component B) also contains an aqueous polymer dispersion based on vinyl or acrylate.

7. Mortar system according to claims 1 to 6, **characterised in that** the liquid component B) contains an aqueous anionic bitumen emulsion and an aqueous polymer dispersion based on vinyl or acrylate in the weight ration 10:90 to 90:10.

8. Mortar system according to claims 1 to 7, **characterised in that** 50 to 120 wt.% of water, based on the weight of the hydraulically hardening binder in component A), are present in the liquid component B).

9. Mortar system according to claims 1 to 8, **characterised in that** it consists exclusively of the two components A) and B).

10. Use of the flowable, hydraulically setting mortar system according to one of the preceding claims for producing self-levelling flow plaster floors.

## Revendications

1. Système de mortier coulant à durcissement hydraulique comprenant un composant poudreux A) et un composant liquide B) dans lequel le composant A) contient :
de 20 à 60 % au moins en masse d'un liant à durcissement hydraulique,
de 30 à 70 % en masse de matière de remplissage,
de 0,1 à 5 % en masse d'additifs et
de 0 à 5 % en masse d'une poudre de polymérisation redispersable
et dans lequel le composant liquide B) contient de l'eau et de 1 à 30 % en masse, sur la base de la masse du liant à durcissement hydraulique, d'une émulsion aqueuse de bitume anionique d'une teneur en matière solide de 30 à 70 % en masse.

2. Système de mortier selon la revendication 1 **caractérisé en ce que** le composant A) contient
- au moins un liant choisi parmi le ciment Portland, le ciment d'alumine ou alumineux, le ciment composite, le ciment à résistance au HS, le plâtre, la chaux et des mélanges de ceux-ci ;
- au moins une matière de remplissage choisie parmi le sable siliceux, la poudre de quartz, la baryte sulfatée, la poudre de calcaire, la craie, l'alumine, la poudre de talc et des mélanges de ceux-ci ;
- au moins un additif choisi parmi les entraîneurs d'air, les fluidifiants, les accélérateurs, les retardateurs, les agents d'antisédimentation, les agents imperméabilisants, et les agents compensateurs de pertes et
- au moins une poudre de polymérisation redispersable choisie parmi des polymères à base de vinyle ou d'acrylate.

3. Système de mortier selon les revendications 1 et 2 **caractérisé en ce qu'**il contient un additif consistant en un fluidifiant du groupe composé des produits de condensation du mélamine-formaldéhyde, des produits de condensation du naphtaline-formaldéhyde, des composés polymères à base de vinyle, des composés polymères à base d'acrylate et de la caséine.

4. Système de mortier selon la revendication 2 **caractérisé en ce que**
- les entraîneurs d'air sont choisis parmi les résines naturelles et/ou des agents tensioactifs synthétiques à base de sulfonates d'acides gras,
- les accélérateurs sont choisis parmi le carbonate de lithium et le formiate de calcium,
- les retardateurs sont choisis parmi l'acide citrique, les citrates, l'acide tartrique, les tartrates, les phosphates et les gluconates,
- l'agent d'antisédimentation est constitué d'un éther cellulosique,
- l'agent imperméabilisant est choisi parmi les sels de calcium d'acides gras et les huiles de silicones et
- l'agent compensateur de pertes est choisi dans le groupe composé de l'oxyde de calcium, de la poudre d'aluminium, des polyéthylèneglycols, des agents tensioactifs non ioniques et du néopentyleglycol.

5. Système de mortier selon les revendications 1 et 2 **caractérisé en ce que** les poudres de polymérisation redispersables sont choisies parmi les polymères à base d'acétate de vinyle, de propionate de vinyle, de laurate de vinyle, de chlorure de vinyle, de chlorure de vinylidène, d'esters de vinyle à chaîne linéaire ou ramifiée comportant entre 3 et 18 atomes de C, les monomères acryliques et méthacryliques (en particulier les esters) ainsi que le styrène et l'éthylène.

6. Système de mortier selon les revendications 1 à 5 **caractérisé en ce que** le composant liquide B) contient en outre une dispersion de polymère aqueuse à base de vinyle ou d'acrylate.

7. Système de mortier selon les revendications 1 à 6 **caractérisé en ce que** le composant liquide B) contient une émulsion aqueuse de bitume anionique et une dispersion aqueuse de polymère à base de vinyle ou d'acrylate selon un rapport en masse compris entre 10:90 et 90:10.

8. Système de mortier selon les revendications 1 à 7 **caractérisé en ce que** dans le composant liquide B) se trouve une quantité d'eau comprise entre 50 et 120 % en masse sur la base de la masse du liant à durcissement hydraulique contenu dans le composant A).

9. Système de mortier selon les revendications 1 à 8 **caractérisé en ce qu'**il est composé exclusivement des deux composants A) et B).

10. Utilisation du système de mortier coulant à durcissement hydraulique selon l'une des revendications ci-dessus pour la réalisation de solins fluides autonivelants.
